# EUROPÄISCHE PATENTSCHRIFT

(11) **EP 0 976 891 B1**
(45) Veröffentlichungstag und Bekanntmachung des Hinweises auf die Patenterteilung: **13.10.2004**
(21) Anmeldenummer: 99113658.1
(22) Anmeldetag: 14.07.1999
(51) Int. Cl.: E04H 1/12, E04B 1/58, F16B 7/04

(54) **Aufbausystem**
Construction system
Système de construction

(30) Priorität: 30.07.1998 DE 19834372; 27.11.1998 DE 29821204 U
(43) Veröffentlichungstag der Anmeldung: 02.02.2000
(73) Patentinhaber: OCTANORM-VERTRIEBS-GMBH FÜR BAUELEMENTE, 70794 Filderstadt (DE)
(72) Erfinder: Bruder, Hans, 72631 Aichtal-Aich (DE)
(74) Vertreter: Patentanwälte Ruff, Wilhelm, Beier, Dauster & Partner

(56) Entgegenhaltungen:
- EP-A- 0 144 030
- US-A- 3 945 742

## Beschreibung

Die Erfindung betrifft ein Aufbausystem zur Erstellung von Aufbauten, insbesondere für den Messe- oder Ladenbau, gemäß dem Oberbegriff von Anspruch 1.

Ein Aufbausystem dieser Art ist aus der EP 0 144 030 B1 bekannt. Dort ist ein achteckiges Rohr vorgesehen, dessen acht Längsseiten jeweils mit einer hinterschnittenen Längsnut versehen sind, die dadurch entsteht, daß ein von der Außenseite ausgehender Schlitz in eine Kammer mündet, die parallel zur Achse des Tragprofiles verläuft. In diese Längsnuten können in bekannter Weise Klemmriegel von Spannschlössern eingeschoben werden, die exzenterbetätigt, die Haken der Riegel gegen die Wand der hinterschnittenen Nut drücken. Bei der bekannten Bauart ist in dem an die längs verlaufenden Kammern angrenzenden Innenbereich ein hohler Innenraum vorgesehen, der mit vier Aussparungspaaren in der Form von dreieckigen Nuten versehen ist, die jeweils so auf Abstand gesetzt sind, daß in die von vier Nuten gebildeten Aussparungen ein Spannschloß stirnseitig eingeschoben werden kann, dessen Querschnitt den Abmessungen der Nuten entsprechen. Da die Betätigungsexzenter der Spannschlösser an deren Seitenflächen liegen, sind die Tragprofile in ihren Seitenflächen mit Öffnungen zur Betätigung der Exzenter der Spannschlösser versehen.

Es gibt eine ganze Reihe von Anwendungsfällen, bei denen man anstelle der eingangs erwähnten achteckigen Tragprofile solche mit anderen Querschnitten, beispielsweise mit quadratischem oder auch rundem Querschnitt verwenden will, die auch in ihren Abmessungen so groß sind, daß die Anordnung eines rohrförmigen Kernbereiches mit der Anordnung einer Einsetzmöglichkeit für die bekannten Spannschlösser zu einem zusätzlichen Materialaufwand und zur Erhöhung des Gewichtes solcher Tragprofile führen würde. Dennoch ist es zum Teil wünschenswert auch solche, an ihrer Außenseite mit hinterschnittenen Nuten versehene Rohrquerschnitte bei Bedarf stirnseitig anschließen zu können.

Aufgabe der Erfindung ist es, ein Aufbausystem der eingangs genannten Art zu schaffen, bei dem das Tragprofil auch beim Vorsehen von größeren Querschnitten insbesondere mit Hilfe der bekannten Spannschlösser in die Längsnuten anderer Profile eingesetzt und dort befestigt werden können.

Diese Aufgabe wird dadurch gelöst, daß die wenigstens eine Aufnahmekammer für das wenigstens eine Spannschloß in wenigstens einem Adapterstück integriert ist, das in zum Inneren des Tragprofiles weisenden Führungen eingesetzt ist, daß die Führungen durchsetzende Bohrungen zum Einsetzen von Sicherungsmitteln vorgesehen sind, die die Axialsicherung des wenigstens einen Adapterstückes in den Führungen übernehmen, und daß das Adapterstück mit seitlichen Öffnungen zur Aufnahme der Betätigungsexzenter des oder der Spannschlösser versehen ist.

Durch die erfindungsgemäße Lösung wird es lediglich notwendig, die vorhandenen oder bekannten Tragprofilquerschnitte auf ihrer Innenseite mit entsprechenden Führungen zum Einsetzen eines Adapterstückes zu versehen, das dann im Bereich des Stirnendes dieses Tragprofiles befestigt werden kann und die Möglichkeit bietet, mindestens ein Spannschloß stirnseitig in eine offene und entsprechend bemessene Aufnahmekammer einzuschieben und dort in bekannter Weise zu verankern. Das Tragprofil kann dann auch stirnseitig mit Hilfe eines Spannschlosses an anderen Bauteilen angebracht werden.

In Weiterbildung der Erfindung sind im Adapterstück Gewindebohrungen für die als Sicherungsmittel dienenden Schrauben vorgesehen, die eine besonders gute und feste Anordnung des Adapterstückes am Tragprofil ermöglichen. In Weiterbildung der Erfindung kann das Adapterstück selbst plattenartig und mit an gegenüberliegenden Kanten angeordneten Leisten zum Einführen in die Führungen auf der Innenseite des Tragprofiles versehen sein. Diese Ausgestaltung weist den Vorteil auf, daß das Adapterstück beidseitig von einem zentralen Rohrbereich mit je einer Aufnahmekammer für ein Spannschloß versehen sein kann und die dann nach den Seiten des Adapterstückes weisenden Betätigungsexzenter gut zugänglich sind.

Um dies auch im vormontierten Zustand der Tragprofile, in dem die Stirnseite an einer Anbaufläche anliegt, zu ermöglichen, wird vorgesehen, daß die Tragprofile mit quer zu ihrer Längsachse verlaufenden Durchgangsöffnungen für ein Betätigungwerkzeug für die Exzenter versehen werden. In Weiterbildung der Erfindung kann auch vorgesehen werden, daß man für den Schaft des Betätigungswerkzeuges unmittelbar angrenzend an die seitliche Öffnung des Adapterstückes, in der der Exzenter zu liegen kommt, eine Art Führungstrichter in der Form einer Hülse vorsieht und diese Hülse mit einem Rand versieht, der in eine entsprechende Längsführung des Adapterstückes einschiebbar ist. Diese Ausgestaltung ist relativ einfach und ermöglicht eine sichere Betätigung der Spannschlösser.

In Weiterbildung der Erfindung kann schließlich noch eine Montageerleichterung für die Tragprofile vor dem Verspannen der Spannschlösser vorgesehen werden, dadurch, daß ein winkelförmiger Halteschieber vorgesehen wird, der bei der Montage in die jeweils obenliegende Längsnut des Tragprofiles formschlüssig eingeschoben und mit seinem Hakenteil in die offene Stirnseite des rechtwinklig dazu verlaufenden Tragprofiles eingehängt wird. Diese Ausgestaltung nämlich sichert bereits die Positionierung der Tragprofile jedenfalls zur Bildung des oberen Abschlusses eines Aufbaues zu, so daß bei Betätigung der Spannschlösser nicht auch noch dafür gesorgt werden muß, daß die Tragprofile zur Montage in einer bestimmten Höhe oder Relativlage gegenüber einem anderen Tragprofil festgehalten werden müssen, ehe die Spannschlösser die Fixierung garantieren.

In weiterer Ausgestaltung der Erfindung weist das Adapterstück ein kreuzförmiges Profil auf, wobei in jedem Kreuzschenkel wenigstens eine Aufnahmekammer integriert ist. Dadurch können wahlweise Spannschlösser vertikal übereinander oder horizontal nebeneinander eingesetzt werden. Das kreuzförmige Profil ermöglicht zudem eine verbesserte Versteifung eines Tragprofiles und ist insbesondere für Vierkanthohlprofile geeignet.

In weiterer Ausgestaltung der Erfindung ist dem Adapterstück im Bereich der Spannschlösser stirnseitig eine Sicherungsanordnung zugeordnet, die das Tragprofil in Längsrichtung der Nut des benachbarten Profiles, in das die Spannschlösser eingreifen, formschlüssig gegenüber dem Profil abstützt. Insbesondere beim rechtwinkligen, stirnseitigen Anschluß des Tragprofiles an ein weiteres Tragprofil oder ein anders gestaltetes Aufbauteil wird durch diese Lösung zuverlässig verhindert, daß das Tragprofil sich insbesondere bei nicht ausreichend festgeklemmten Spannschlössern längs zu dem benachbarten Profil verschiebt. Somit ist es möglich, auch hohe Belastungen des Tragwerkes zuverlässig aufzunehmen, ohne eine Veränderung der Positionierung der Tragprofile zueinander zu bewirken.

Die Erfindung ist anhand von Ausführungsbeispielen in der Zeichnung dargestellt und wird im folgenden erläutert. Es zeigen:
- Fig. 1: eine perspektivische Explosionsdarstellung der Bauteile für ein Tragprofil nach der Erfindung,
- Fig. 2: den Querschnitt des Tragprofiles nach Fig. 1 im zusammengebauten Zustand,
- Fig. 3: die schematische Darstellung einer unter Verwendung des erfindungsgemäßen Tragprofiles nach den Fig. 1 und 2 hergestellten Raumecke eines Gestells,
- Fig. 4: die Darstellung eines Montageschrittes zum Zusammenfügen von Tragprofilen nach Fig. 1 und 2,
- Fig. 5: die schematische Darstellung einer Variante eines Tragprofilquerschnittes,
- Fig. 6: eine weitere Varianten eines Tragprofilquerschnittes,
- Fig. 7: eine dritte Variante eines Tragprofilquerschnittes,
- Fig. 8: den Querschnitt des Tragprofiles nach Fig. 5 mit eingesetztem Adapter,
- Fig. 9: den Querschnitt des Tragprofiles nach Fig. 7 mit eingesetztem Adapter,
- Fig. 10: den Querschnitt einer weiteren Ausführungsform eines Tragprofiles nach der Erfindung,
- Fig. 11: eine andere Variante eines Tragprofilquerschnittes,
- Fig. 12: eine Variante eines Adpaters für das Tragprofil nach Fig. 11,
- Fig. 13: den Querschnitt des Tragprofiles nach Fig. 11 mit dem eingesetzten Adapter nach Fig. 12,
- Fig. 14: in einer perspektivischen Explosionsdarstellung eine weitere Ausführungsform eines erfindungsgemäßen Tragprofiles, das stirnseitig mit einer vertikalen Tragsäule verbunden wird, und
- Fig. 15: in einer Querschnittdarstellung eine weitere Ausführungsform eines erfindungsgemäßen Tragprofiles mit einem kreuzförmigen Adapterstück.

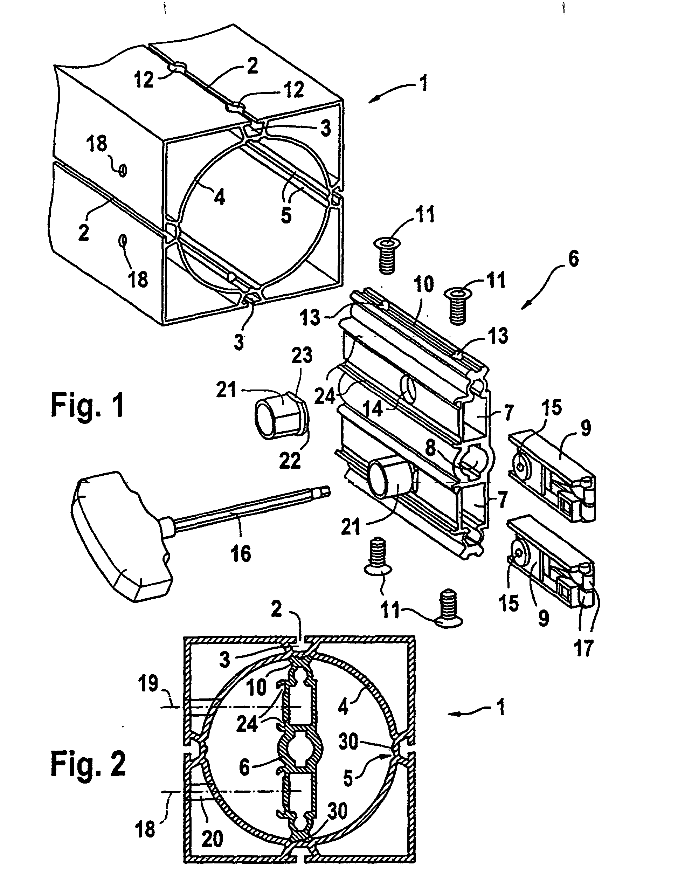

Die Fig. 1 zeigt ein gezogenes, insbesondere aus Aluminium bestehendes, als Tragprofil dienendes Profilrohr 1 mit einem quadratischen Querschnitt, der innen in einen Kreisquerschnitt übergeht. Jede der vier Seiten des Profilrohres 1 ist mit einer hinterschnittenen Längsnut 2 versehen, die dadurch gebildet ist, daß ein von der Außenseite ausgehender Schlitz in eine darunterliegende Hohlkammer 3 mit größeren Abmessungen mündet als es der Breite des Schlitzes entspricht. Die Wände der Hohlkammern 3 gehen innen in den kreisförmigen Kern 4 über und bilden jeweils, wie insbesondere aus Fig. 2 hervorgeht, längs verlaufende Nuten 5, die zum Inneren des Kreisrohrbereiches 4 hinweisen. In zwei diametral gegenüberliegende Nuten 5 mit einem Steg 30 in ihrer Mitte ist ein Adapterstück 6 von der freien Stirnseite des Profilrohres 1 her eingeschoben, das aus Fig. 1 deutlich zu erkennen ist. Das Adapterstück 6 ist in der Form eines gezogenen und auf Länge abgeschnittenen plattenförmigen Profil ausgebildet, das drei durchgehende Hohlkammern 7 bzw. 8 aufweist, von denen die beiden Kammern 7 in ihrem Querschnitt dem Querschnitt von Spannschlössern 9 angepaßt sind, die in die Kammern 7 eingeschoben werden können.

Die Hohlkammer 8 kann mit einem Gewinde versehen werden, um Schraubbolzen zentral einsetzen und das Profilrohr 1 an bekannte Verbindungsköpfe (siehe Druckschrift DE-A-197 14 996) ansetzen zu können, die keine Nuten zum Befestigen von Spannschlössern aufweisen.

Das Adapterstück 6 besitzt auf seinen beiden einander gegenüberliegenden Schmalseiten das Profil einer Führungsleiste 10, deren Querschnitt jeweils dem Querschnitt der Nuten 5 und des Steges 30 angepaßt ist. Fig. 2 zeigt, daß diese Führungleisten dazu dienen, das Adapterstück 6 innerhalb des Rohrquerschnittes 4 in der in der Fig. 2 gezeigten Lage zu halten. Die Längssicherung des Adapterstückes 6 an der Stirnseite des Profilrohres 1 erfolgt durch Schrauben 11, die durch entsprechende Öffnungen 12 im Bereich der Nuten 2 von außen durch das Profilrohr 1 hindurch bis in Gewindebohrungen 13 des Adapterstückes 6 geführt sind.

Das Adapterstück 6 ist mit Öffnungen 14 versehen, die jeweils in die Kammern 7 münden und die so ausgebildet und so angeordnet sind, daß ein Betätigungsexzenter 15 eines Spannschlosses, der beim Einschieben eines Spannschlosses in die Kammer 7 in bekannter Weise unter der Wirkung einer Feder in die Öffnung 14 einschnappt, um die Axiallage des Spannschlosses 9 zu sichern, durch die Öffnung 14 hindurch zur Betätigung zugänglich ist. Die Exzenter 15 besitzen eine Vielzahn-Vertiefung (Torx-Schlüsselangriff) und können mit Hilfe eines Spezialschlüssels 16 verdreht werden, wobei sie dann in bekannter Weise zwei schwenkbar im Spannschloß 9 angeordnete Klemmhaken 17 auseinanderspreizen, die sich in ebenfalls bekannter Weise jeweils in einer der hinterschnittenen Nuten 2 eines dem Profilrohr 1 mit seiner Achse senkrecht zugeordneten weiteren Profilrohres verhaken.

Um den Zugang zu der Öffnung 14 und zum Exzenter 15 an der Außenseite des Profilrohres 1 her zu ermöglichen, ist das Profilrohr 1 an den entsprechenden Stellen mit Durchgangsöffnungen 18 versehen, durch die dann, wie Fig. 2 erkennen läßt, der Spezialschlüssel 16 in Richtung der Achse 19 durchgeführt werden kann, um die Spannschloßbetätigung durchzuführen. Die Öffnungen 18 gehen, wie ebenfalls Fig. 2 zeigt, natürlich durch bis zum inneren kreisförmigen Profilteil 4 und es ist auch möglich, in diese Öffnungen, wie in Fig. 2 gestrichelt eingezeichnet, Führungshülsen 20 für den Spezialschlüssel 16 vorzusehen, die sein Einfädeln ermöglichen. Die Fig. 1 zeigt zusätzlich, daß jeweils vor den Öffnungen 14 Einführtrichter in der Form von Hülsen 21 vorgesehen sein können, die ebenfalls das Einführen des Spezialschlüssels 16 in den Vielzahneingriff der Exzenter erleichtern. Diese Hülsen 21 besitzen beim Ausführungsbeispiel einen Anschlagrand 22 mit zwei gegenüberliegenden Abflachungen 23. Das Adapterstück 6 besitzt zwei einander zugeordnete Führungsstege 24, die jeweils in der Längsrichtung angrenzend an die Öffnung 14 verlaufen. In diese Führungsstege 24 kann nun die Hülse 21 zunächst so eingesetzt werden, daß die Abflachungen 23 parallel zu den Stegen 24 verlaufen. Wird die Hülse 21 danach um 90° verdreht, so greift ihr Rand 22 hinter die Führungsstege 24 und die Hülse 21 wird am Adapterstück 6 gehalten.

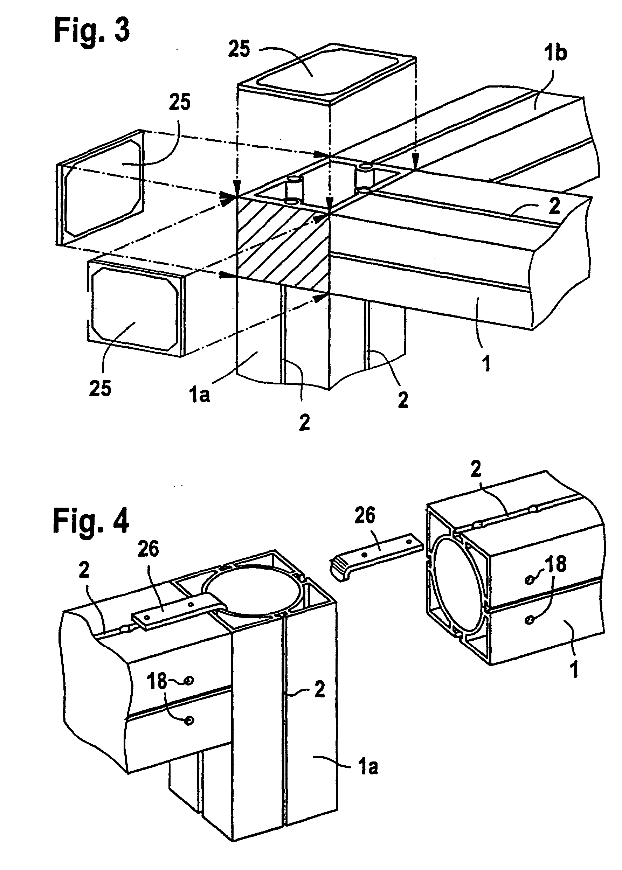

Die Fig. 3 zeigt, daß durch diese Ausgestaltung das Profilrohr 1 mit seiner Stirnseite an eine Seitenfläche eines gleich ausgebildeten aber senkrecht stehenden Profilrohres 1a angesetzt und dort befestigt werden kann, so daß, wenn noch ein weiteres Profilrohr 1b verwendet wird, durch die erfindungsgemäße Ausgestaltung eine Raumecke eines Gestelles gebildet werden kann, das beispielsweise zum Aufbau eines Messestandes dient. In Fig. 3 ist schematisch angedeutet, daß man aus ästhetischen Gründen den Endabschnitt des stehenden Profilrohres 1a mit Platten 25 verkleiden kann, so daß der optische Eindruck eines Verbindungsknotens erreicht werden kann, der technisch bei der Erfindung aber nicht erforderlich ist.

Um beim Aufbau eines solchen Gestelles für einen Messe- oder Ausstellungsstand den Montageaufwand zu verringern, können Arretierhaken 26 vorgesehen werden, die in nicht näher dargestellter Weise an ihrer in Fig. 4 vom Betrachter abgewandten Unterseite eine Art Schwalbenschwanzprofil aufweisen, mit dem sie stirnseitig in die obenliegende Nut 2 des Profilrohres 1 einschiebbar sind. Mit diesen Arretierhaken 26 wird es daher, wie die Fig. 4 auch zeigt, in relativ einfacher Weise möglich, Profilrohre 1 und 1a aneinanderzusetzen, ehe die - in Fig. 4 nicht gezeigten - Spannschlösser durch die Öffnungen 18 hindurch betätigt werden. Die Profilrohre 1 werden durch die Arretierhaken 26 in der späteren Endlage vorläufig gesichert und brauchen daher für den eigentlichen Spannvorgang mit Hilfe der Spannschlösser nicht in der gewünschten Endlage an der stehenden Profilrohrsäule 1a gehalten zu werden. Sie sind durch die Arretierhaken 26 in der Höhe gesichert und können dann in einfacher Weise mit Hilfe des Adapterstückes 6 und der Spannschlösser 9 befestigt werden.

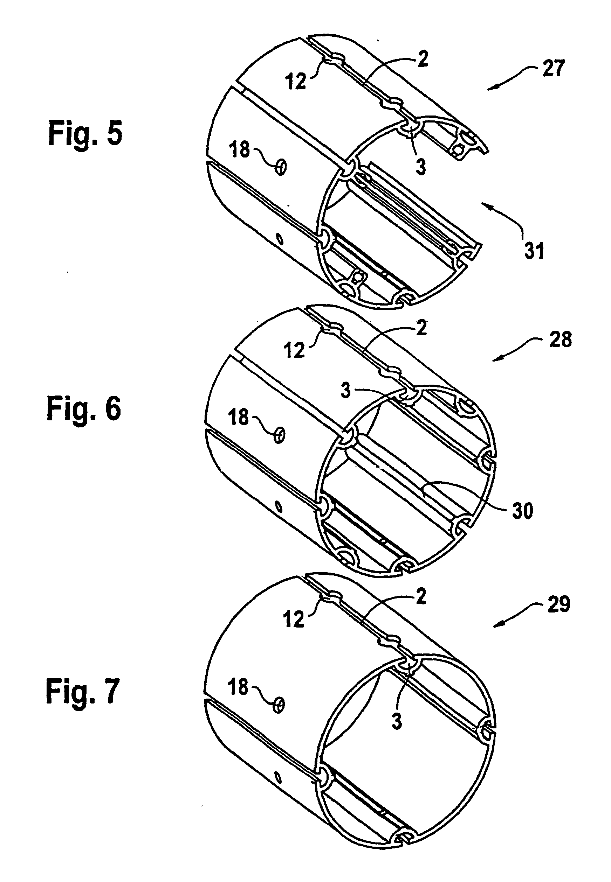

Die Fig. 5 bis 9 zeigen nun Profilrohre 27, 28 und 29, die einen Kreisrohrquerschnitt aufweisen, der anstelle des im Querschnitt quadratischen Profilrohres 1 ebenfalls zur Herstellung von schnell montierbaren und schnell wieder demontierbaren Aufbauten eingesetzt werden kann. Auch die Profile 27 bis 29 besitzen die längs verlaufenden Nuten 2, die in Kammern 3 münden. Es sind daher für diese Nuten und Kammern sowie für alle Teile, die jenen der Ausführungsform der Fig. 1 und 2 entsprechen, die gleichen Bezugszeichen gewählt worden. Auch bei diesen Profilen, die sich zunächst untereinander nur dadurch unterscheiden, daß das Profil 27 eine seitliche Öffnung 31 besitzt und die Profile 29 und 28 sich nur in der Anzahl der Nuten 2 unterscheiden, weisen die nach innen gerichteten Hohlkammern 3 auf ihrer dem Innenraum zugewandten Seite einen durchgehenden Steg 30 auf, der, wie auch bei der Ausführungsform nach den Fig. 1 und 2 zur Führung des Leistenteiles 10 des Adapterstückes 6 dient. Öffnungen 18 schließlich ermöglichen wieder, wie beim Ausführungsbeispiel der Fig. 1 und 2 den Zugang eines Spezialschlüssels 16, wobei auch hier das Adapterstück 6, das in der gleichen Weise durch Öffnungen 12 hindurch mit Schrauben gesichert wird, mit den Führungsleisten 24 zum Einsetzen einer Führungshülse 21 versehen sein kann, die das Einführen des Spezialschlüssels 16 in die - nicht gezeigten - Exzenter 15 ermöglichen.

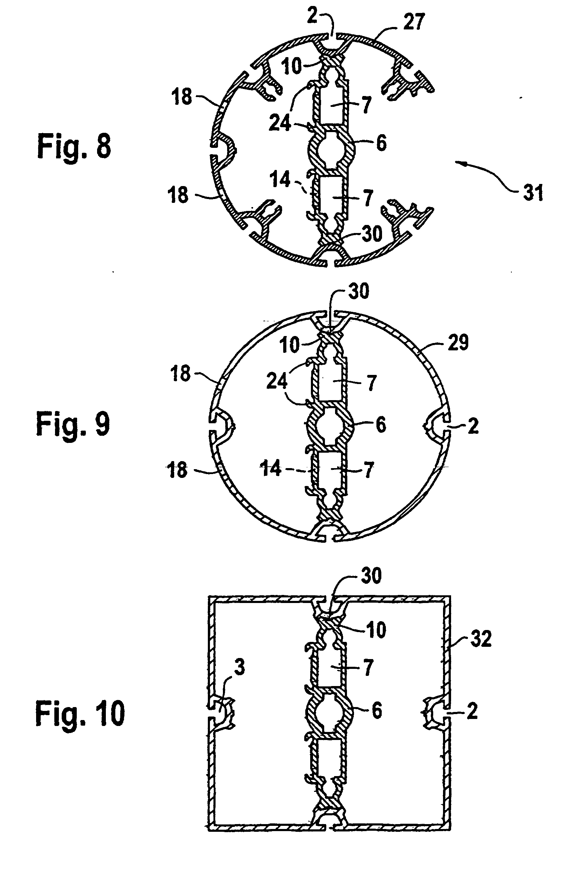

Die Fig. 10 zeigt eine Abwandlung eines Profiles gemäß Fig. 2, bei dem jedoch der innere Kreisrohrteil 4 fehlt. Das Profil 32 besitzt daher einen quadratischen Querschnitt mit vier nach innen gerichteten Kammern 3, an denen wiederum der Steg 30 zur Führung des Adapterstückes 6 angeordnet ist. Auch solche Profile können erfindungsgemäß zum Aufbau von Gestellen eingesetzt werden.

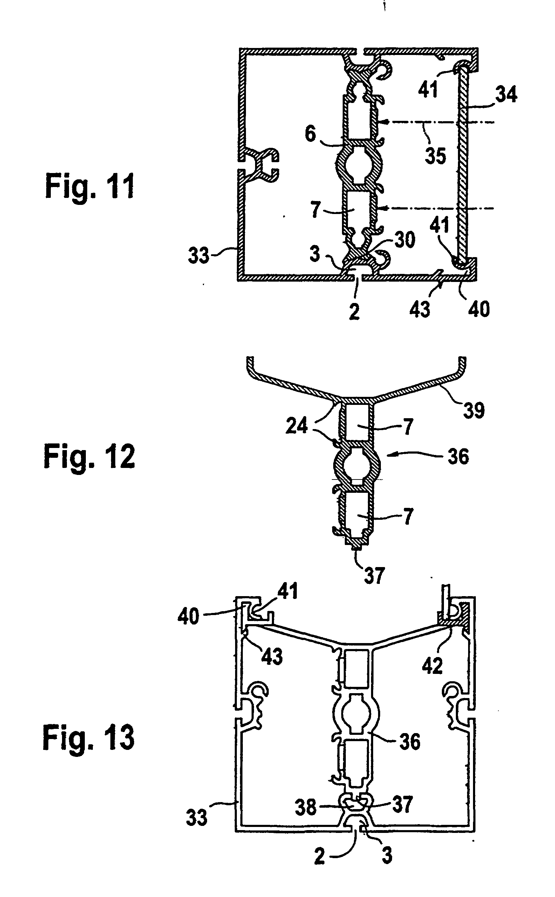

Die Fig. 11 bis 13 zeigen nun Varianten eines Profilrohres 33 mit quadratischen Querschnittabmessungen, dessen eine Seite jedoch offen ist, so daß beispielsweise eine transparente Wand 34 eingesetzt werden kann, wenn besondere Effekte erzielt werden sollen. Auch hier sind aber an zwei gegenüberliegenden Kammern 3 wieder die Führungsstege 30 für das Adapterstück 6 vorgesehen, dessen Spannschlösser in diesem Fall von der offenen Seite im Sinn der Pfeile 35 zugängig sind.

Die Fig. 12 zeigt nun ein Adapterstück 36, das zwar ebenfalls mit zwei Kammern 7 zum Einsetzen von nicht gezeigten Spannschlössern 9 ausgerüstet ist, das aber im übrigen Aufbau, abgesehen von den Führungsleisten 24 für eventuelle Hülsen 21 in seinem Aufbau von dem Adapterstück 6 abweicht. Dieses Adapterstück 36 kann in das Profil 33 von der offenen Seite her eingesetzt werden und greift dann mit einem Führungssteg 37 in eine Nut einer Kammer 38, die angrenzend an eine Hohlkammer 3 und einen an der Außenseite verlaufenden Nutenschlitz 2 angrenzt. Das Adapterstück 36 besitzt auf der von dem Steg 37 abgewandten Seite zwei sich flügelartig nach außen erstreckende Laschen 39, die, wie Fig. 13 zeigt, in den Zwischenraum 40 zwischen der Außenwand des Profilrohres 3 und den Einhängehaken 41 eingreifen. Das Adapterstück 36 wird auf diese Weise im Profil gehalten. Es kann axial durch Verwendung von Schrauben 11, wie anhand der vorhergehenden Figuren beschrieben, gesichert werden. Möglich ist es hier aber auch, die Laschen 39 entsprechend axial zu halten, wenn entsprechende Klemmleisten 42 in dem durch den Zwischenraum 40 und einen Führungssteg 43 gebildeten Führung gehalten werden.

Die Erfindung ermöglicht, wie aus der vorstehenden Beschreibung deutlich wird, daher die Verwendung von Profilen verschiedener Querschnittsformen für den Aufbau von Gestellen, der bisher in so einfacher Weise nicht möglich war.

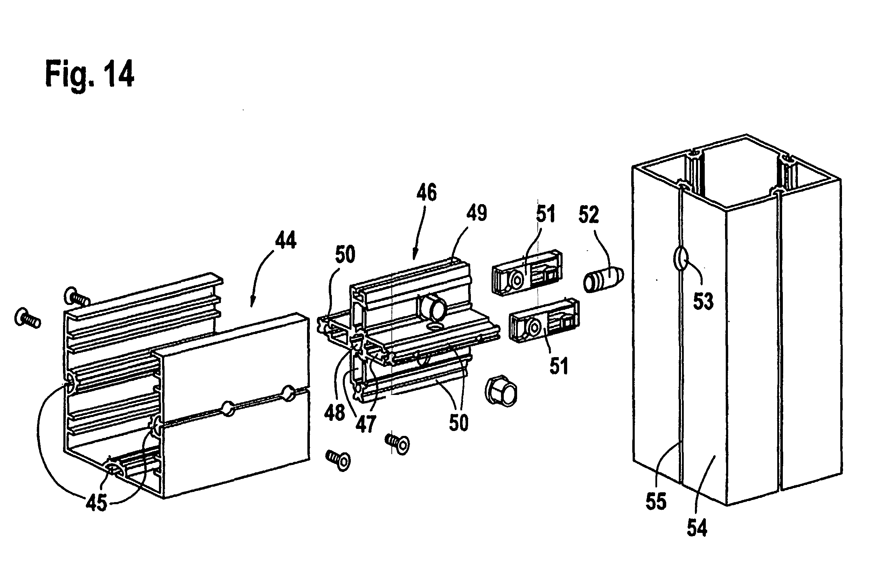

Beim Ausführungsbeispiel nach Fig. 14 ist in ein horizontales, nach oben offenes Tragprofil 44 stirnseitig ein Adapterstück 46 eingesetzt, das ein kreuzförmiges Profil aufweist. Das Tragprofil 44 weist an den gegenüberliegenden Seitenwandungen sowie im Bereich seines Bodens jeweils eine in Profillängsrichtung verlaufende Führung 45 auf, die gemäß den zuvor beschriebenen Ausführungsbeispielen auf Höhe der außenliegenden Nuten nach innen gerichtet sind. Das kreuzförmige Adapterstück 46 weist an den freien Längskanten der beiden seitlichen Kreuzschenkel sowie des unteren Kreuzschenkels jeweils eine korrespondierend gestaltete Führungsprofilierung 50 auf, die ebenfalls in Profillängsrichtung verläuft. Das Adapterstück 46 ist wie das Tragprofil 44 aus einem Strangpreßprofil, insbesondere aus einem Leichtmetallwerkstoff, hergestellt. Die Kreuzschenkel des Adapterstückes 46 sind als Hohlprofile gestaltet und mit jeweils einer Aufnahmekammer 47 versehen, in die stirnseitig in an sich bekannter Weise Spannschlösser 51 einbringbar sind. Zentral im Mittelbereich des Adapterstückes 46 zwischen den vier Aufnahmekammern 47 ist zudem eine Hohlkammer 48 vorgesehen, die zur stirnseitigen Aufnahme eines Sicherungsbolzens 52 dient. Der Sicherungsbolzen 52 ist Teil einer Sicherungsanordnung, die das Adapterstück 46 und damit auch das Tragprofil 44 relativ zu einem benachbarten, vertikal ausgerichteten Tragprofil 54 formschlüssig sichert. Dazu ist das benachbarte Tragprofil 54 auf Höhe seiner Längsnut 55, in die die Spannschlösser 51 eingreifen, mit einer Gegenbohrung, die als Sicherungsaussparung 53 dient, versehen. Der Sicherungsbolzen 52 ragt derart über die Stirnseite des Adapterstückes 46 hinaus, daß der Sicherungsbolzen 52 beim Einsetzen der Spannschlösser 51 in die Längsnut 55 gleichzeitig in die Gegenbohrung 53 eintaucht. Diese Sicherungsanordnung bildet somit eine formschlüssige Sicherung gegen ein Nachuntengleiten des Tragprofiles 44 längs des Tragprofiles 54 bei nicht ausreichend angezogenen Spannschlössern 51 oder bei entsprechenden Überbelastungen.

Der obere Kreuzschenkel des Adapterstückes 46 nach Fig. 14 ist mit einer Aufnahmenut 49 versehen, die zur Halterung eines weiteren Aufbauteiles, vorwiegend auch zur Halterung einer die offene Seite des Tragprofiles 44 verschließenden Deckwand dienen kann.

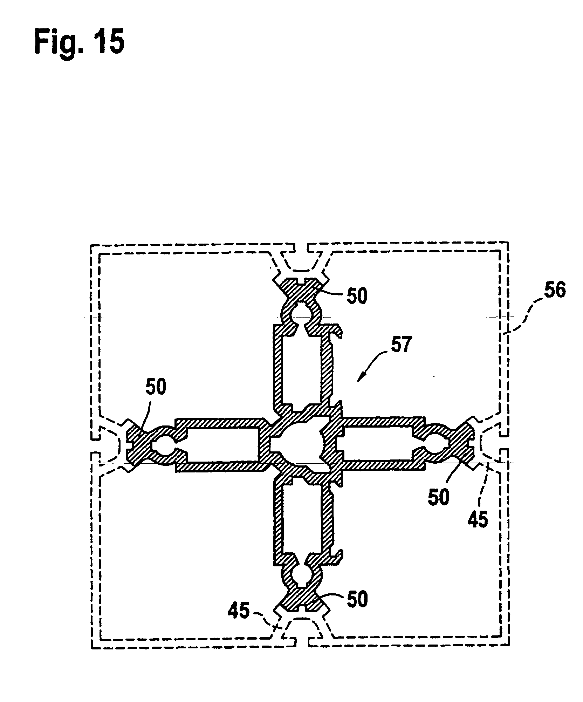

Beim Ausführungsbeispiel nach Fig. 15 ist das vierkantige Tragprofil 56 als geschlossenes Hohlprofil gestaltet, das in seinem Inneren durch ein kreuzförmiges Adapterstück 57 ähnlich dem anhand der Fig. 14 beschriebenen Adapterstück 46 fachwerkartig versteift ist. Das Adapterstück 57 nach Fig. 15 ist an allen vier Kreuzschenkeln mit außenliegenden Führungsprofilierungen 50 versehen, die an allen vier Längsseiten des Tragprofiles 56 in korrespondierende, innenliegende Führungen des Tragprofiles 56 eingreifen. Diese Führungen entsprechen den Führungen 45 des Tragprofiles 44 nach Fig. 14. Die Anordnung der Spannschlösser sowie die axiale Fixierung des Adapterstückes in dem Tragprofil entspricht im übrigen den zuvor beschriebenen Ausführungsbeispielen.

Das Adapterstück 46 ist in dem Tragprofil 44 mittels seitlich einsetzbarer Schrauben axial sicherbar. Hierzu wird auf die zuvor erfolgte Beschreibung der vorangegangenen Ausführungsbeispiele verwiesen. Dies gilt auch für alle weiteren, in den Zeichnungen dargestellten Teile und Merkmale, die bereits anhand der vorhergehenden Ausführungsbeispiele erläutert worden waren.

## Patentansprüche

1. Aufbausystem zur Erstellung von Aufbauten, insbesondere für den Messe- oder Ladenbau, mit einem Tragprofil (1), das außenseitig mit längs verlaufenden Nuten (2) und in seinem Kernbereich mit mindestens einer Aufnahmekammer (7, 48) versehen ist, sowie mit wenigstens einem Spannschloss (9, 51), das zum Anschluss weiterer Tragprofile oder Aufbauteile des Aufbausystems dient, in die Aufnahmekammer (7, 48) einsetzbar ist, deren Querschnitt dem Querschnitt des Spannschlosses (9, 51) angepasst ist und zwei exzenterbetätigt auseinanderspreizbare Klemmhaken (17) zum Verhaken in einer hinterschnittenen Nut eines weiteren Tragprofils aufweist,
**dadurch gekennzeichnet,**
**dass** die wenigstens eine Aufnahmekammer (7, 48) für das wenigstens eine Spannschloss (9, 51) in einem Adapterstück (6, 36, 46, 57) integriert ist, das in zum Inneren des Tragprofiles weisende Führungen (30, 45) eingesetzt ist, dass die Führungen (30, 45) durchsetzende Bohrungen (12) zum Einsetzen von Sicherungsmitteln (11) vorgesehen sind, die die Axialsicherung des Adapterstückes in den Führungen (30, 45) übernehmen und dass das Adapterstück (6, 36) mit seitlichen Öffnungen (14) zur Aufnahme von Betätigungsexzentern (15) des oder der Spannschlösser (9) versehen ist.

2. Aufbausystem nach Anspruch 1, **dadurch gekennzeichnet, daß** im Adapterstück (6) Gewindebohrungen für als Sicherungsmittel dienende Schrauben (11) vorgesehen sind.

3. Aufbausystem nach einem der Ansprüche 1 oder 2, **dadurch gekennzeichnet, daß** das Adapterstück (6) plattenartig ausgebildet ist und an seinen gegenüberliegenden Schmalseiten mit zu den Führungen (30) korrespondierenden Führungen (10) versehen ist.

4. Aufbausystem nach Anspruch 3, **dadurch gekennzeichnet, daß** das Adapterstück (6) mit zwei Aufnahmekammern (7) für Spannschlösser (9) versehen ist.

5. Aufbausystem nach einem der Ansprüche 1 bis 4, **dadurch gekennzeichnet, daß** eine Durchgangsöffnung (18) im Tragprofil (2) zum Durchführen eines Betätigungswerkzeuges (16) für die Exzenter (15) der Spannschlösser (9) vorgesehen ist.

6. Aufbausystem nach Anspruch 5, **dadurch gekennzeichnet, daß** für den Schaft des Betätigungswerkzeuges (16) ein Führungstrichter in der Form einer ansetzbaren Hülse (21) vorgesehen ist.

7. Aufbausystem nach Anspruch 6, **dadurch gekennzeichnet, daß** die Hülse (21) in eine Führung (24) des Adapterstückes (6, 36) einschiebbar ist.

8. Aufbausystem nach Anspruch 1, **dadurch gekennzeichnet, daß** hakenförmige Arretierschieber (26) vorgesehen sind, die an ihrem von dem Haken abgewandten Teil mit einer in die Nuten (2) an den Außenseiten passenden Führung versehen sind.

9. Aufbausystem nach Anspruch 4, **dadurch gekennzeichnet, daß** zwischen den beiden Aufnahmekammern (7) eine zentrale Hohlkammer (8) vorgesehen ist, die mit einem Gewinde zur Aufnahme eines Befestigungsbolzens versehen ist.

10. Aufbausystem nach einem der vorhergehenden Ansprüche, **dadurch gekennzeichnet, daß** das Adapterstück (46, 57) ein kreuzförmiges Profil aufweist, wobei in jedem Kreuzschenkel wenigstens eine Aufnahmekammer (48) integriert ist.

11. Aufbausystem nach Anspruch 10, **dadurch gekennzeichnet, daß** die außenliegenden Längskanten von wenigstens zwei Kreuzschenkeln mit zu den Führungen (45) korrespondierenden Führungsprofilierungen (50) versehen sind.

12. Aufbausystem nach Anspruch 10 oder 11, **dadurch gekennzeichnet, daß** ein Kreuzschenkel an seiner Längskante mit einer Aufnahmenut (49) für die Halterung einer Deckwand oder eines anderen Aufbauteiles versehen ist.

13. Aufbausystem nach einem der vorhergehenden Ansprüche, **dadurch gekennzeichnet, daß** dem Adapterstück (46) im Bereich der Spannschlösser (51) stirnseitig eine Sicherungsanordnung (52, 53) zugeordnet ist, die das Tragprofil (44) bei Gebrauch in Längsrichtung der Nut (55) des benachbarten Profiles (54), in das die Spannschlösser (51) eingreifen, formschlüssig gegenüber dem Profil (54) abstützt.

14. Aufbausystem nach Anspruch 13, **dadurch gekennzeichnet, daß** die Sicherungsanordnung durch einen stirnseitig im Bereich der wenigstens einen Aufnahmekammer (47) in dem Adapterstück (46) positionierten und über die Stirnseite abragenden Sicherungsbolzen (52) einerseits und durch eine korrespondierende Sicherungsaussparung (53), insbesondere eine Bohrung, an dem benachbarten Profil (54) andererseits gebildet ist, wobei der Sicherungsbolzen (52) in die Sicherungaussparung (53) eingreift, sobald die Spannschlösser (51) in die Nut (55) des benachbarten Profiles (54) eintauchen.

## Claims

1. Construction system for erecting structures, in particular for exhibition or shop constructions, having a carrier profile (1) which is provided, at the outer side, with longitudinally extending grooves (2) and, in the central region thereof, with at least one receiving chamber (7, 48), and having at least one clamping lock (9, 51) which serves to connect further carrier profiles or structural components of the construction system and which can be inserted in the receiving chamber (7, 48), whose cross-section is adapted to the cross-section of the clamping lock (9, 51), and which has two clamping hooks (17) which can be widened relative to each other in a cam-operated manner for hooking in an undercut groove of a further carrier profile, **characterised in that** the at least one receiving chamber (7, 48) for the at least one clamping lock (9, 51) is integrated in an adapter piece (6, 36, 46, 57) which is inserted in guides (30, 45) which face the inner side of the carrier profile, **in that** holes (12) which extend through the guides (30, 45) are provided for the insertion of securing means (11) which serve to axially secure the adapter piece in the guides (30, 45), and **in that** the adapter piece (6, 36) is provided with lateral openings (14) for receiving operating cams (15) of the clamping lock(s) (9).

2. Construction system according to claim 1, **characterised in that** threaded holes for screws (11) which serve as securing means are provided in the adapter piece (6).

3. Construction system according to either claim 1 or claim 2, **characterised in that** the adapter piece (6) is constructed in a plate-like manner and is provided, at the opposing narrow sides thereof, with guides (10) which correspond to the guides (30).

4. Construction system according to claim 3, **characterised in that** the adapter piece (6) is provided with two receiving chambers (7) for clamping locks (9).

5. Construction system according to any one of claims 1 to 4, **characterised in that** a through-hole (18) is provided in the carrier profile (2) for inserting an operating tool (16) for the cams (15) of the clamping locks (9).

6. Construction system according to claim 5, **characterised in that** a guiding funnel in the form of an attachable sleeve (21) is provided for the shaft of the operating tool (16).

7. Construction system according to claim 6, **characterised in that** the sleeve (21) can be inserted into a guide (24) of the adapter piece (6, 36).

8. Construction system according to claim 1, **characterised in that** there are provided hook-like stopping slides (26) which are provided, at the portion thereof remote from the hook, with a guide which fits into the grooves (2) at the outer sides.

9. Construction system according to claim 4, **characterised in that** a central hollow chamber (8) is provided between the two receiving chambers (7) and is provided with a thread for receiving a securing pin.

10. Construction system according to any one of the preceding claims, **characterised in that** the adapter piece (46, 57) has a cross-shaped profile, at least one receiving chamber (48) being integrated in each cross member.

11. Construction system according to claim 10, **characterised in that** the outer longitudinal edges of at least two cross members are provided with guiding profiles (50) which correspond to the guides (45).

12. Construction system according to claim 10 or 11, **characterised in that** a cross member is provided, at the longitudinal edge thereof, with a receiving groove (49) for retaining a roof wall or another structural component.

13. Construction system according to any one of the preceding claims, **characterised in that** a securing arrangement (52, 53) is associated with the adapter piece (46) at the end face thereof in the region of the clamping locks (51) and, when used, supports the carrier profile (44) in a positive-locking manner relative to the profile (54) in the longitudinal direction of the groove (55) of the adjacent profile (54), in which the clamping locks (51) engage.

14. Construction system according to claim 13, **characterised in that** the securing arrangement is formed, at one side, by a securing pin (52) which is positioned at the end face in the region of the at least one receiving chamber (47) in the adapter piece (46) and which protrudes over the end face, and, at the other side, by a corresponding securing recess (53), in particular a hole, on the adjacent profile (54), the securing pin (52) engaging in the securing recess (53) as soon as the clamping locks (51) are inserted into the groove (55) of the adjacent profile (54).

## Revendications

1. Système de construction pour la création de superstructures, en particulier destinées à des stands d'exposition ou des présentoirs de magasin, composé d'un profilé porteur (1) pourvu, sur sa face extérieure, de rainures longitudinales (2) et, en son centre, d'au moins un espace d'accueil (7, 48), ainsi que d'au moins un tendeur (9, 51) servant au raccordement d'autres profilés porteurs ou de pièces du système de construction, insérable dans l'espace d'accueil (7, 48), dont la section est adapté à la section du tendeur (9, 51) et présentant deux crochets de serrage (17) pouvant être écartés l'un de l'autre par commande excentrée pour l'accrochage dans une rainure contre-dépouillée d'un autre profilé porteur, **caractérisé par le fait qu'**au moins un des espaces d'accueil (7, 48) pour au moins un tendeur (9, 51) est intégré dans un adaptateur (6, 36, 46, 57) introduit dans les guidages (30, 45) dirigés vers l'intérieur du profilé porteur, qu'il est prévu des orifices (12) traversant les guidages (30, 45) pour l'introduction de sécurités (11) qui assurent la stabilité axiale de l'adaptateur dans les guidages (30, 45) et que l'adaptateur (3, 36) est doté d'ouvertures latérales (14) destinées à accueillir des excentriques de commande (15) du ou des tendeurs (9).

2. Système de construction selon la revendication 1, **caractérisé par le fait que** des orifices filetés sont prévus dans l'adaptateur (6) pour des vis (11) faisant office de sécurités.

3. Système de construction selon l'une des revendications 1 et 2, **caractérisé par le fait que** l'adaptateur (6) est conçu en plaque et pourvu, sur ses côtés étroits opposés, de guidages (10) correspondants aux guidages (30).

4. Système de construction selon la revendication 3, **caractérisé par le fait que** l'adaptateur (6) est pourvu de deux espaces d'accueil (7) pour des tendeurs (9).

5. Système de construction selon l'une des revendications 1 à 4, **caractérisé par le fait qu'**une ouverture traversante (18) dans le profilé porteur (2) est prévue pour le passage d'un outil de commande (16) de l'excentrique (15) du tendeur (9).

6. Système de construction selon la revendication 5, **caractérisé par le fait qu'**un entonnoir de guidage de la forme d'une douille amovible (21) est prévu pour le manche de l'outil de commande (16).

7. Système de construction selon la revendication 6, **caractérisé par le fait que** la douille (21) peut être introduite dans un guidage (24) de l'adaptateur (6, 36).

8. Système de construction selon la revendication 1, **caractérisé par le fait que** des butées (26) en forme de crochets sont prévues, pourvues sur leur côté opposé au crochet d'un guidage adapté aux rainures (2) de la face extérieure.

9. Système de construction selon la revendication 4, **caractérisé par le fait qu'**entre les deux espaces d'accueil (7), un espace creux (8) central est prévu, pourvu d'un filetage destiné à un boulon de fixation.

10. Système de construction selon l'une des revendications ci-dessus, **caractérisé par le fait que** l'adaptateur (46, 57) présente un profilé cruciforme dans lequel chaque intersection de croix est pourvue d'un espace d'accueil (48).

11. Système de construction selon la revendication 10, **caractérisé par le fait que** les bords longitudinaux extérieurs d'au moins deux intersections de croix sont pourvus de profils de guidages (50) correspondants aux guidages (45).

12. Système de construction selon l'une des revendications 10 et 11, **caractérisé par le fait qu'**une intersection de croix est pourvue, sur son bord longitudinal, d'une rainure d'accueil (49) pour le maintien d'une paroi de recouvrement ou d'un autre élément de construction.

13. Système de construction selon l'une des revendications ci-dessus, **caractérisé par le fait que** l'adaptateur (46) dans la zone du tendeur (51) est pourvu à l'avant d'un insert de sécurité (52, 53) qui bloque contre le profilé (54) le profil porteur (44) en situation d'usage dans la direction longitudinale de la rainure (55) du profilé voisin (54) dans lequel les tendeurs (51) sont insérés.

14. Système de construction selon la revendication 13, **caractérisé par le fait que** l'insert de sécurité est constitué, d'une part, d'un boulon de sécurité (52) positionné à l'avant dans la zone d'au moins un espace d'accueil (47) dans l'adaptateur (46) et dépassant de la face avant et, d'autre part, d'une encoche de sécurité (53) correspondante, en particulier un orifice, dans le profilé voisin (54), le boulon de sécurité (52) s'insérant dans l'encoche de sécurité (53) lorsque les tendeurs (51) sont introduits dans la rainure (55) du profilé voisin (54).
